Europäisches Patentamt

(19) European Patent Office

Office européen des brevets

(11) Numéro de publication: **0 063 516**
**B1**

(12) **FASCICULE DE BREVET EUROPEEN**

(45) Date de publication du fascicule du brevet: **24.09.86**

(51) Int. Cl.⁴: **H 01 S 3/00, G 01 J 1/42**

(21) Numéro de dépôt: **82400613.4**

(22) Date de dépôt: **02.04.82**

(54) **Procédé de mesure des variations du gain d'un amplificateur laser et dispositif pour la mise en oeuvre de ce procédé.**

(30) Priorité: **06.04.81 FR 8106857**

(43) Date de publication de la demande:
**27.10.82 Bulletin 82/43**

(45) Mention de la délivrance du brevet:
**24.09.86 Bulletin 86/39**

(84) Etats contractants désignés:
**DE GB IT**

(56) Documents cités:
**DE-B-3 002 558
FR-A-2 428 829
US-A-3 687 558**

**IEEE JOURNAL OF QUANTUM ELECTRONICS,
vol. QE-15, no. 6, juin 1979, pages 510-523, New
York, USA, G.J. LINFORD et al.:
"Measurements and modeling of gain
coefficients for neodymium laser glasses"**

**JAPANESE JOURNAL OF APPLIED PHYSICS,
vol. 20, no. 1, janvier 1981, pages 71-74, Tokyo,
JP., E. FUJIWARA et al.: "Amplification
property of an electron-beam pumped KrF
laser"**

(73) Titulaire: **COMMISSARIAT A L'ENERGIE
ATOMIQUE Etablissement de Caractère
Scientifique Technique et Industriel
31/33, rue de la Fédération
F-75015 Paris (FR)**

(72) Inventeur: **Bedu, Marcel
7, Impasse Villa des Roses
F-92140 Clamart (FR)**
Inventeur: **Rousseau, Thierry
16, Allée André Gide - Bât. 13
F-93330 Neuilly sur Marne (FR)**

(74) Mandataire: **Mongrédien, André et al
c/o BREVATOME 25, rue de Ponthieu
F-75008 Paris (FR)**

(56) Documents cités:
**OPTICS COMMUNICATIONS, vol. 22, no. 3,
septembre 1977, pages 288-292, Amsterdam,
NL., P. GILL et al.: "Measurements of gain in
the hollow-cathode He-Zn laser"**

Courier Press, Leamington Spa, England.

EP 0 063 516 B1

**Description**

La présente invention a pour objet un procédé de mesure des variations du gain d'un amplificateur laser en fonction de l'énergie de pompage et un dispositif pour la mise en oeuvre de ce procédé. Elle trouve une application en optique, notamment dans la réalisation de chaînes d'amplificateurs lasers.

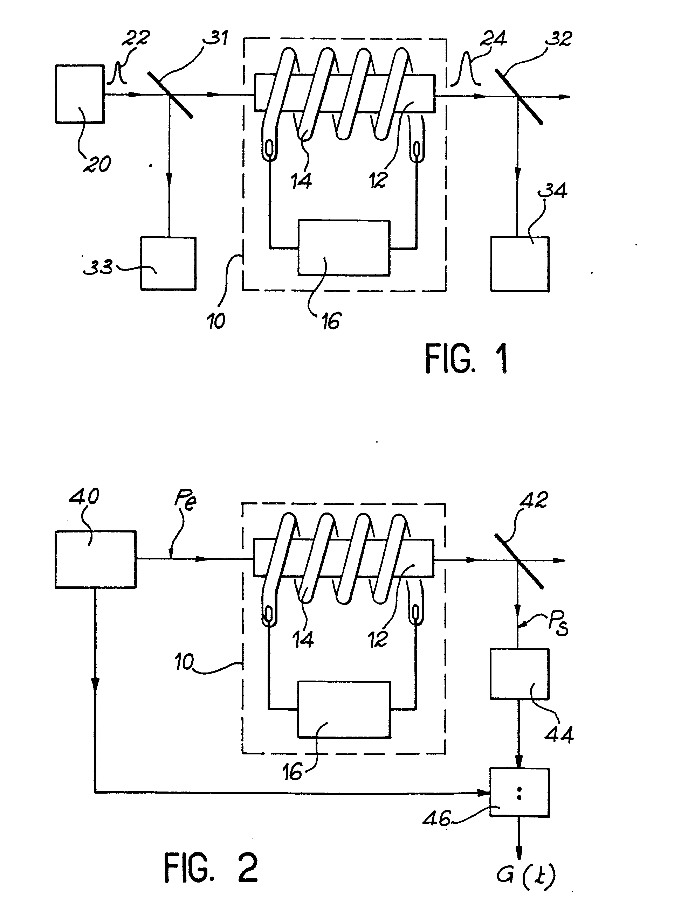

On connaît essentiellement deux procédés de mesure du gain d'un amplificateur laser. Les moyens permettant de les mettre en oeuvre sont illustrés schématiquement sur les figures 1 et 2.

Dans le dispositif représenté sur la figure 1, le laser amppificateur dont on veut mesurer le gain porte la référence 10. Il est constitué classiquement par un barreau amplificateur 12 autour duquel est enroulé un tube éclair 14 alimenté en énergie électrique par un circuit 16.

Le dispositif comprend un outre un laser oscillateur 20 apte à émettre un rayonnement lumineux en forme d'impulsion 22 qui traverse le barreau amplificateur 12 à une distance $R_n$ de l'axe de ce barreau, ce rayonnement étant à une longueur d'onde qui est celle à laquelle la mesure du gain doit être effectuée. L'impulsion 22 est amplifiée par le barreau 12 lorsque celui-ci est rendu amplificateur sous l'effet du pompage optique créé par le tube éclair. L'impulsion de sortie 24 qui apparaît à la sortie de l'amplificateur possède alors une énergie plus grande que celle de l'impulsion d'entrée 22.

Le système comprend encore deux lames semi-transparentes 31 et 32 placées respectivement à l'entrée et à la sortie du barreau amplificateur 12 et deux détecteurs photosensibles 33 et 34 (calorimètres, cellules photoélectriques, etc.) aptes à mesurer une énergie lumineuse.

Le fonctionnement d'un tel dispositif est le suivant. Les lames 31 et 32 prélèvent une partie des impulsions d'entrée 22 et de sortie 24 et dirigent cette partie sur les détecteurs 33 et 34 qui mesurent les énergies correspondantes. La mesure du rapport de ces énergies donne immédiatement le gain du barreau 12, pour la valeur de l'énergie de pompage utilisée et pour le rayon $R_n$ considéré.

Pour obtenir les variations G(E) du gain en fonction de l'énergie de pompage E, il faut effectuer une série de mesures de ce type pour plusieurs valeurs de E.

Le second procédé est illustré sur la figure 2 où le dispositif représenté comprend encore un laser amplificateur 10 dont on veut mesurer le gain, et un laser oscillateur 40 qui, à la différence du laser 20 du dispositif précédent, fonctionne en continu. Ce laser émet un rayonnement à la longueur d'onde d'amplification du barreau 12. Lorsque ce dernier est par exemple un barreau de verre dopé au néodyme, le laser 40 peut être par exemple du type YAG.

Le dispositif représenté comprend encore une lame séparatrice 42 un détecteur photoélectrique 44 et un diviseur 46 du signal délivré par 44 par une quantité proportionnelle à la puissance délivrée par le laser 40.

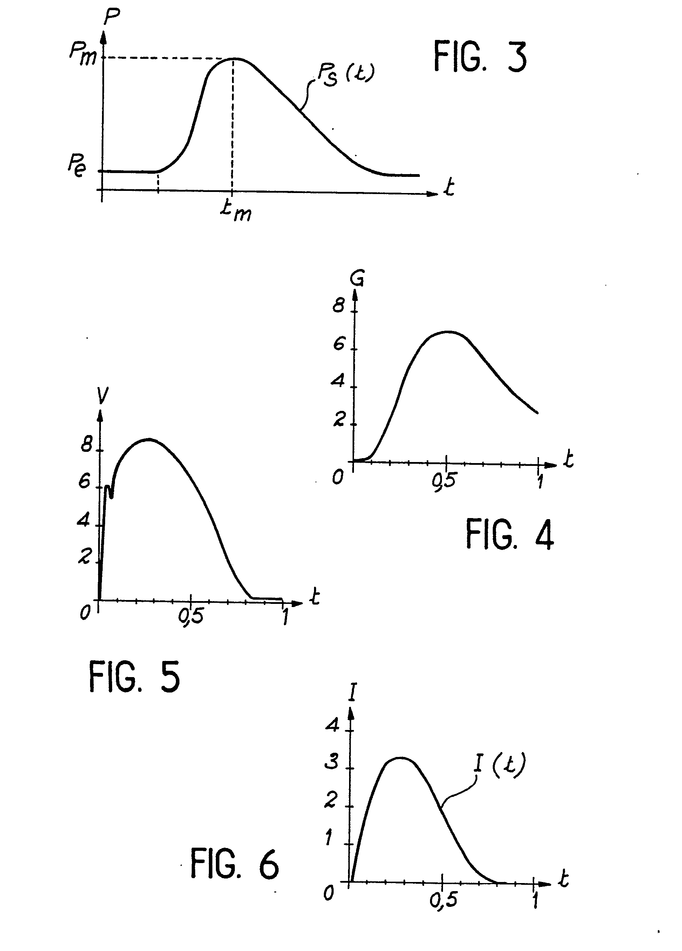

Le fonctionnement de ce dispositif est illustré au moyen de graphique de la figure 3 qui représente la variation dans le temps du signal délivré par le détecteur 44. Ce signal représente la puissance lumineuse Ps(t) mesurée à la sortie de l'amplificateur 10 pour le rayon $R_n$. En l'absence de pompage optique, cette puissance est égale à la valeur Pe du rayonnement d'entrée émis par le laser 40.

Pendant le pompage, la puissance Ps(t) croît jusqu'à une valeur maximale Pm, qui est atteinte à un instant tm, puis decroît pour tendre à nouveau vers Pe. Le gain du barreau amplificateur, qui est égal au quotient Ps(t)/Pe varie donc en fonction du temps pendant toute la durée de l'impulsion de pompage et passe par un maximum égal à Pm/Pe et atteint au temps t=tm.

Dans l'art antérieur, on retient généralement la valeur maximum de ce quotient, que l'on appelle gain maximum (ou "peak gain coefficient" en terminologie anglosaxonne) et pour obtenir les variations de ce gain maximum en fonction de l'énergie de pompage E, il faut, comme pour le dispositif précédent, effectuer plusieurs mesures pour différentes énergies E et relever à chaque fois la valeur du gain maximum correspondante.

Une telle technique est décrite par exemple dans l'article de Gary J. Linford et al publié dans la revue IEEE Journal of Quantum Electronics, vol. QE-15, No. 6, Juin 1979, pages 510—522.

Les deux procédés de l'art antérieur qui viennent d'être décrits présentent l'inconvénient de nécessiter plusieurs opérations de pompage ou "tirs" pour explorer toute la plage d'énergie souhaitée. Manifestement, cette contrainte accroît le temps de mesure et en outre elle réduit la durée de vie de l'élément à mesurer. Enfin, ces procédés ne donnent pas accès au gain "instantané" de l'amplificateur mais à une valeur particulière de ce gain qui est le gain maximum, l'énergie considérée n'étant pas, elle non plus, l'énergie dépensée en pompage à l'instant où l'on veut connaître la valeur du gain, mais l'énergie intégrée sur la totalité de l'impulsion de pompage. Or, cette énergie contient une part qui intervient après que le gain est passé par son maximum, c'est-à-dire après l'instant où l'on effectue la mesure. On peut donc dire qui de telles mesures ne portent pas véritablement sur une grandeur ayant un sens physique précis, la seule grandeur permettant de mesurer le véritable fonctionnement du laser étant le gain à un instant donné en fonction de l'énergie dépensée par le pompage à cet instant.

La présente invention a justement pour objet un procédé et un dispositif qui évitent ces inconvénients car elle permet d'obtenir les variations recherchées du gain véritable en fonction de l'énergie de pompage et cela en un seul tir, c'est-à-dire en une seule opération de pompage. A cette fin, le procédé est du genre de celui qui a été décrit à propos de la figure 2 et il est caractérisé en ce qu'on mesure le croissance E(t) de l'énergie de pompage utilisée au cours de ce pompage et en ce qu'on deduit, par élimination de temps $t$ entre G(t) et E(t), une relation G(E) qui représente les variations recherchées du gain à chaque instant du pompage en fonction de l'énergie de pompage dépensée jusqu'à cet instant.

La présente invention a également pour objet un dispositif pour la mise en oeuvre du procédé qui vient d'être défini.

Différents modes particuliers de réalisation de l'invention vont maintenant être décrits, en référence à des dessins annexés qui font suite à ceux des figures 1 à 3 déjà décrites et sur lesquels:

— la figure 4 est un diagramme illustrant les variations du gain d'un amplificateur laser en fonction du temps, pour une énergie de pompage donnée pour un rayon $R_n$,
— la figure 5 est un diagramme illustrant les variations de la tension d'excitation du tube éclair en fonction du temps,
— la figure 6 est un diagramme illustrant les variations du courant d'excitation du tube éclair en fonction du temps,
— la figure 7 est un diagramme illustrant les variations de la puissance électrique dissipée dans le tube éclair en fonction du temps,
— la figure 8 est un diagramme illustrant les variations de différentes énergies mises en jeu et notamment l'énergie de pompage,
— la figure 9 représente les variations du gain en fonction de l'énergie de pompage pour un rayon $R_n$,
— la figure 10 représente schématiquement des moyens de mise en oeuvre du procédé de l'invention,
— les figures 11a et 11b représentent une variante à plusieurs photorécepteurs répartis le long d'un rayon de l'amplificateur,
— la figure 12 représente des moyens de traitement supplémentaires permettant de déterminer les variations du gain en fonction du rayon.

Comme indiqué plus haut, la détermination selon l'invention des variations du gain en fonction de l'énergie de pompage passe par la détermination préalable des variations G(t) du gain en fonction du temps et de celles E(t) de l'énergie de pompage en fonction de ce même temps. Le diagramme de la figure 4 représente les premières, à savoir G(t), dans un système d'axes où le temps figure en abscisses (échelle 0,1 ms par division) et le gain G en ordonnées (et exprimé en dB) et cela pour un amplificateur particulier. Cette courbe est obtenue à partir des résultats illustrés par la figure 3, en prenant pour valeur du gain le quotient de la puissance de sortie Ps(t) de l'amplificateur par la puissance d'entrée Pe. Cette première détermination peut s'effectuer comme dans l'art antérieur.

Conformément à l'invention, on mesure en outre et simultanément les variations de la tension V(t) et du courant I(t) appliqués au tube éclair. Ces variations sont illustrées respectivement par les figures 5 et 6 où le temps est encore porté en abscisses avec la même échelle (0,1 ms par division), la tension et le courant étant portés en ordonnées, toujours pour l'amplificateur particulier en question. L'échelle des tensions est de 1 kV par division et celle des courants de 5 kA par division.

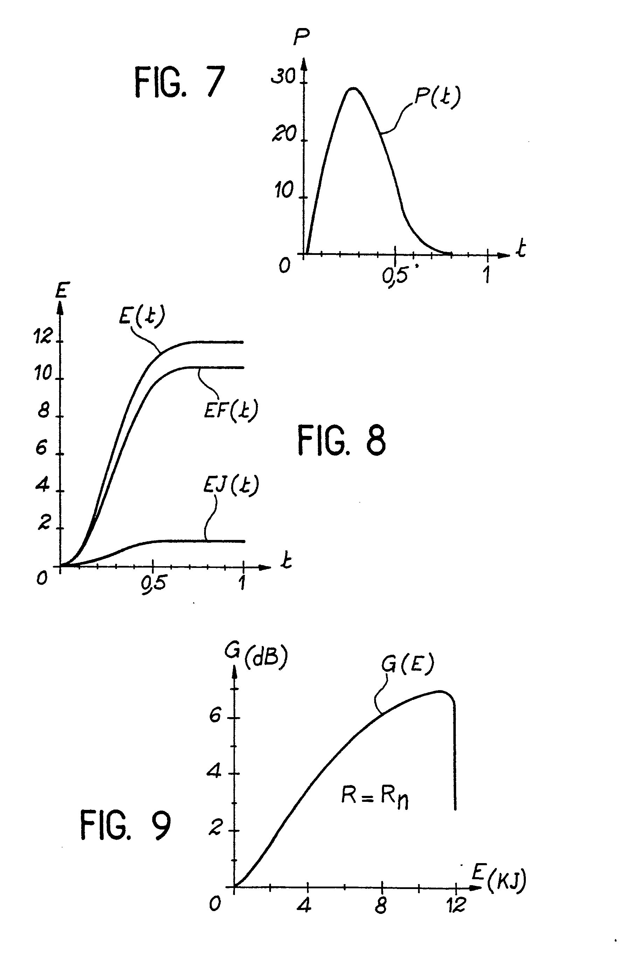

La figure 7 représente la puissance électrique P(t) obtenue par formation du produit V(t).I(t). L'échelle des puissances est, dans le cas illustré, de 30 MW par division. Celle du temps est toujours de 0,1 ms par division.

L'intégration dans le temps de cette puissance permet de déterminer la croissance de l'énergie, soit EF(t), dissipée dans le tube éclair. Pour obtenir l'énergie totale E(t), il faut ajouter à EF(t), l'énergie EJ(t) dissipée par effet Joule dans le circuit d'alimentation et le tube éclair et qui ne participe pas au pompage optique. Les variations de ces trois énergies sont représentées sur le diagramme de la figure 8 où le temps est toujours porté en abscisses (0,1 ms par division) et l'énergie en ordonnées (1 kJ par division).

Selon l'invention, à partir des signaux G(t) (figure 4) et E(t) (figure 8) on tire par élimination du temps t, un signal G(E), lequel est représenté par la courbe de la figure 9 où l'énergie E est portée en abscisses (1 kJ par division) et le gain G en ordonnées (1 dB division) pour un rayon $R_n$ du barreau 12. Conformément à l'invention, cette courbe est obtenue en un seul tir.

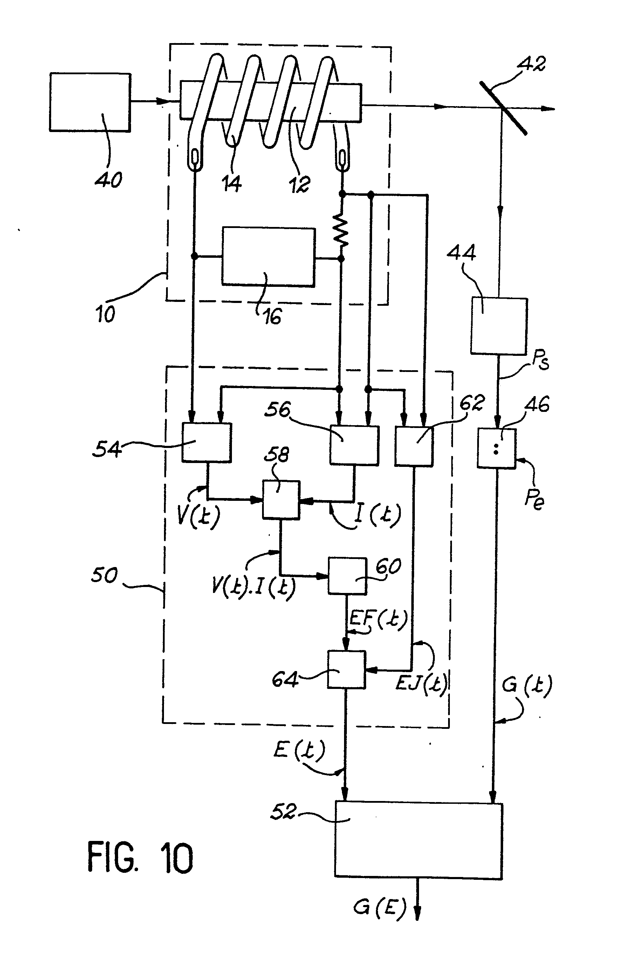

Les moyens permettant de mettre en oeuvre le procédé qui vient d'être décrit sont illustrés sur la figure 10. Ils comprennent tout d'abord et comme dans l'art antérieur illustré sur la figure 2, une source 40 de rayonnement continu qui fonctionne à la longueur d'onde de mesure et qui émet une puissance Pe. Ce rayonnement traverse l'amplificateur 12 dont on veut mesurer le gain. Un moyen 42 est utilisé pour prélever une partie du rayonnement amplifié à la sortie de l'amplificateur, ce moyen étant en général une lame semi-transparente. Un photorécepteur 44 reçoit la partie prélevée et mesure la puissance de sortie Ps pendant toute la durée du pompage optique. Enfin, un circuit 46 forme le quotient de Ps par Pe et délivre un signal G(t) qui représente les variations du gain en fonction du temps pendant le pompage.

Le dispositif de la figure 10 est caractérisé en ce qu'il comprend en outre un moyen 50 pour mesurer la croissance E(t) de l'énergie de pompage et un moyen 52 pour tirer des deux signaux G(t) et E(t), par élimination du temps t, le signal G(E) recherché.

Dans l'exemple illustré, le moyen 50 comprend:

— un circuit 54 de mesure de la tension V(t) d'alimentation du tube éclair 14,
— un circuit 56 de mesure du courant I(t) circulant dans le tube éclair,
— un multiplieur 58 relié aux deux circuits

précédents et délivrant un signal produit $P(t)=V(t).I(t)$,

— un intégrateur 60 relié au multiplieur 58 et délivrant un signal EF(t) représentant l'énergie de pompage du tube éclair,

— un circuit 62 déterminant l'énergie EJ(t) perdue par effet Joule dans le circuit de pompage, par la détermination du produit $Ri^2dt$ de la résistance équivalente R, du courant i, pendant un intervalle de temps dt et intégration de ce produit,

— un sommateur 64 relié à ce dernier circuit 62 et à l'intégrateur 60 et délivrant le signal E(t) recherché.

Toute la chaîne de calcul décrite peut être de caractère analogique ou de caractère numérique ou encore de type hybride numérique-analogique.

Dans ce qui précède, le faisceau lumineux de mesure possède une faible puissance. Le gain mesuré est donc un gain "à petit signal". Par ailleurs, le diamètre de ce faisceau est en général beaucoup plus faible que celui de l'amplificateur laser, de sorte que le gain mesuré est le gain à une distance bien déterminée de l'axe $(R_n)$ de l'amplificateur. Mais il est aise d'étendre l'invention au cas où le faisceau émis par le laser oscillateur occupe une fraction importante de la section droite du barreau amplificateur auquel cas la mesure décrite peut être effectuée simultanément en une pluralité de points.

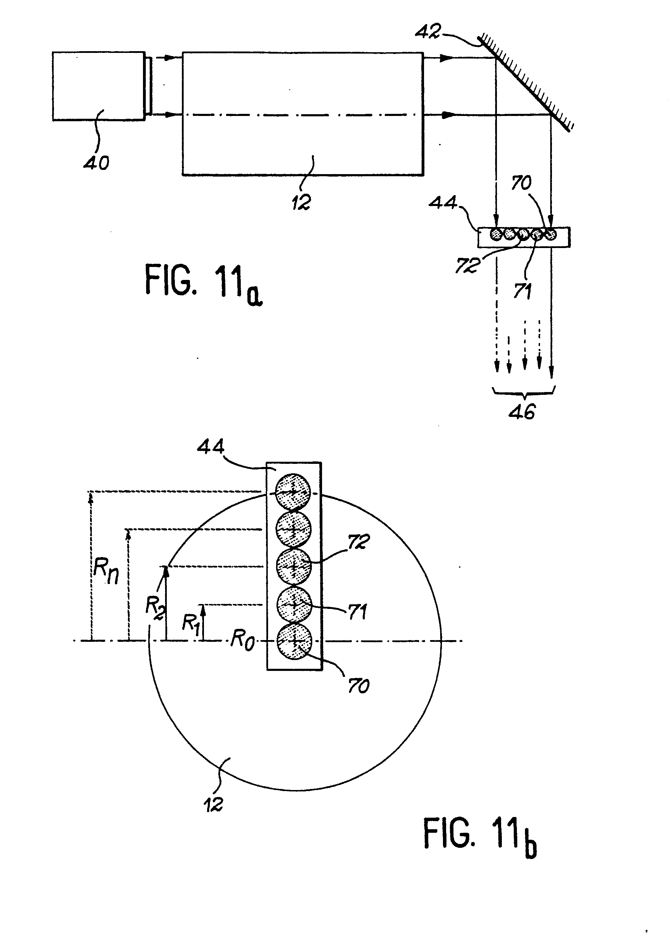

Il est intéressant notamment d'utiliser un faisceau de mesure dont le diamètre est égal (ou légèrement supérieur) au rayon du barreau à mesurer et des moyens de réception répartis le long d'un rayon du barreau amplificateur. C'est ce qui est représenté sur les figures 11a et 11b où l'on voit une pluralité de photorécepteurs 70, 71, 72 ... répartis le long d'un rayon à des distances de l'axe égales à $R_0$, $R_1$, $R_2$ ... $R_n$. Ces photo-détecteurs peuvent être des photodiodes ou des éléments d'une barrette du genre Réticon.

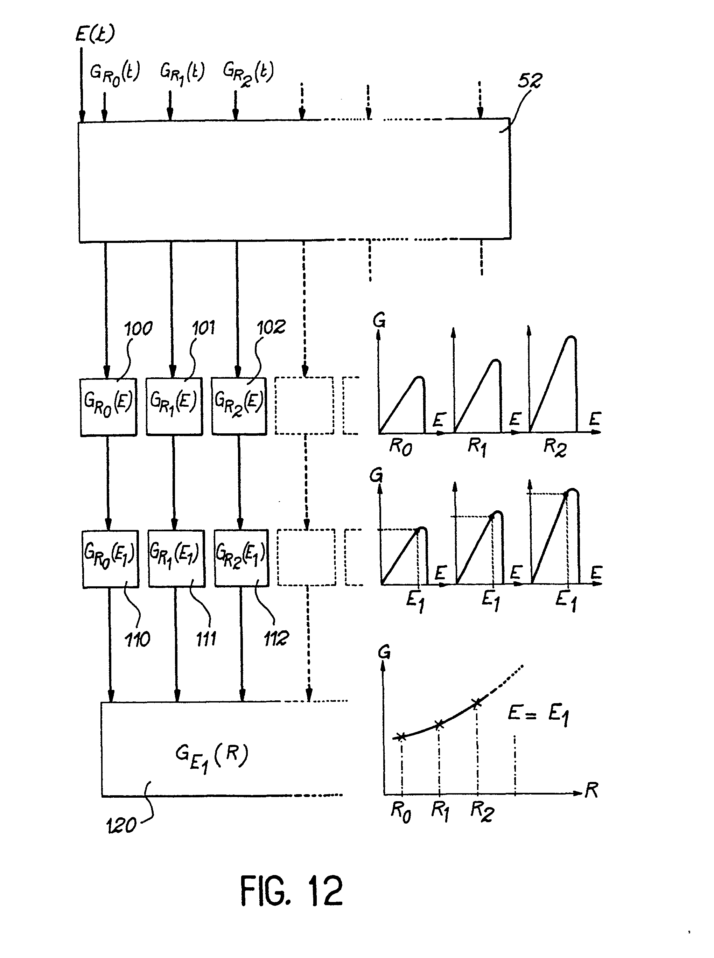

La figure 12 représente des moyens annexes de traitement permettant de tirer profit au mieux du dispositif de la figure 11 à plusieurs photo-détecteurs. Le moyen 52 d'élimination du temps, reçoit, en plus du signal E(t), autant de signaux G(t) qu'il y a de photorécepteurs, soit $G_{R0}(t)$, $G_{R1}(t)$, $G_{R2}(t)$, ... Au lieu de ne posséder qu'une sortie délivrant un signal G(E), le moyen 52 en possède autant que de photorécepteurs. Ces sorties délivrant des signaux représentant les variations $G_{R0}(E)$, $G_{R1}(E)$, $G_{R2}(E)$, ... du gain en fonction de l'énergie pour les différents rayons $R_0$, $R_1$, $R_2$, ... Ces résultats sont mémorisés dans des moyens 100, 101, 102, ... (cf. les courbes figurant à droite des moyens 100, 101, 102, ...).

Des moyens 110, 111, 112, ... reliés directement aux moyens 100, 101, 102, ... sont aptes à déterminer, pour chaque rayon $R_0$, $R_1$, $R_2$, ... la valeur du gain pour une énergie particulière $(E_1)$. Ces différentes valeurs sont prises en compte par un moyen 120 qui détermine ainsi, pour ladite valeur $E_1$ de l'énergie de pompage, les variations du gain $G_{E1}(R)$ en fonction du rayon R (cf. la courbe représentée à droite du moyen 120).

## Revendications

1. Procédé de mesure des variations du gain instantané d'un amplificateur laser pour une certaine longueur d'onde en fonction de l'énergie de pompage dépensée jusqu'à cet instant, procédé selon lequel on engendre un rayonnement lumineux continu ayant ladite longueur d'onde et une puissance Pe, on fait traverser l'amplificateur par ce rayonnement, on prélève une partie du rayonnement amplifié à la sortie de l'amplificateur, on mesure pendant la durée de pompage, par des impulsions de lumière, la variation de la puissance Ps de cette partie et on calcule le quotient de Ps par Pe, ce qui fournit pendant le pompage les variations G(t) du gain en fonction du temps, ce procédé étant caractérisé en ce qu'on mesure la croissance E(t) de l'énergie de pompage utilisée au cours de ce pompage et en ce qu'on deduit, par élimination du temps $t$ entre G(t) et E(t), une relation G(E) qui représente les variations recherchées du gain à chaque instant du pompage en fonction de l'énergie de pompage dépensée jusqu'à cet instant.

2. Procédé selon la revendication 1, caractérisé en ce que, pour mesurer la croissance E(t) de l'énergie de pompage utilisée au cours du pompage jusqu'à l'instant $t$, on mesure la tension d'alimentation V(t) et la courant d'alimentation I(t) à l'instant t, on forme le produit V(t).I(t), on intègre ce produit dans le temps, ce qui fournit une énergie EF(t), on détermine l'énergie EJ(t) perdue par effet Joule dans le circuit d'alimentation du moyen de pompage et on calcule la somme EF(t)+EJ(t).

3. Dispositif de mesure des variations du gain d'un laser (10) pour la mise en oeuvre du procédé selon la revendication 1 ou 2, comprenant un barreau amplificateur (12) et un moyen de pompage optique (14, 16) émettant des impulsions de lumière dirigées sur le barreau amplificateur, le gain étant mesuré pour une certaine longueur d'onde, en fonction de l'énergie de pompage délivrée par le moyen de pompage, ce dispositif comprenant une source (40) délivrant un rayonnement lumineux continu ayant ladite longueur d'onde et une puissance Pe, ce rayonnement traversant le barreau amplificateur (12) à une distance de l'axe de ce barreau égale à un rayon déterminé, un moyen (42) pour prélever une partie du rayonnement amplifié à la sortie de l'amplificateur, un photorécepteur (44) qui reçoit cette partie et qui en mesure la puissance Ps pendant la durée de pompage, un moyen (46) pour former le quotient de Ps par Pe et délivrer un signal G(t) qui représente les variations du gain en fonction du temps pendant le pompage, ce dispositif étant caractérisé en ce qu'il comprend en outre un moyen (50) pour délivrer un signal E(t) représentant l'énergie de pompage dépensée au cours de pompage jusqu'à l'instant t et un moyen (52) pour deduire par élimination du temps t entre les deux signaux G(t) et E(t), un signal G(E) qui représente les variations du gain à chaque instant du pompage en fonction de l'énergie dépensée par le pompage jusqu'à cet instant, ce gain étant celui du barreau amplificateur à une distance de l'axe égale au rayon déterminé.

4. Dispositif selon la revendication 3, caractérisé en ce que le moyen (50) pour délivrer le signal E(t) représentant l'énergie de pompage dépensée au cours du pompage jusqu'à l'instant t comprend:

— un circuit (54) de mesure de la tension d'alimentation V(t),
— un circuit (56) de mesure du courant d'alimentation I(t),
— un multiplicateur (58) relié aux deux circuits précédentes (54, 56) et délivrant un signal produit $P(t)=V(t).I(t)$,
— un intégrateur (60) relié au multiplicateur délivrant un signal EF(t),
— un circuit (62) déterminant l'énergie EJ(t) perdue par effet Joule dans le circuit d'alimentation de pompage,
— un sommateur (64) relié à ce dernier circuit (62) et à l'integrateur (50) et délivrant le signal $E(t)=EF(t)+EJ(t)$ recherché.

5. Dispositif selon l'une quelconque des revendications 3 et 4, caractérisé en ce que la source (40) délivre un faisceau lumineux dont le diamètre est au moins égal au rayon de l'amplificateur laser, le photorécepteur (44) comprenant une pluralité d'éléments photorécepteurs répartis le long du rayon de l'amplificateur à des distances $R_0, R_1, R_2 \ldots R_n$ de l'axe de cet amplificateur, ces photorécepteurs délivrant au moyen (52) des signaux $G_{R0}(t), G_{R1}(t), G_{R2}(t), \ldots, G_{Rn}(t)$, ce moyen délivrant autant de signaux $G_{R0}(E), G_{R1}(E), G_{R2}(E) \ldots G_{Rn}(E)$ représentant les variations du gain pour les différentes valeurs $R_0, R_1, R_2, \ldots R_n$.

6. Dispositif selon la revendication 5, caractérisé en ce qu'il comprend en outre des mémoires (100, 101, 102, . . .) ayant chacune une entrée reliée au moyen (52) d'élimination du temps, aptes à mémoriser les signaux $G_{R0}(E)$, $G_{R1}(E), G_{R2}(E), \ldots G_{Rn}(E)$ delivrés par le moyen d'élimination (52), autant de moyens de calcul (110, 111, 112, . . .) reliés chacun à une desdites mémoires et aptes à déterminer les valeurs $G_{R0}(E_1), G_{R1}(E_1), G_{R2}(E_1) \ldots, G_{Rn}(E_1)$ prises par le gain pour une énergie particulière $E_1$, et un moyen (120) relié auxdits moyens de calcul et apte à déterminer les variations du gain $G_{E1}(R)$ le long du rayon de l'amplificateur pour ladite énergie $E_1$.

**Patentansprüche**

1. Verfahren zum Messen von augenblicklichen Verstärkungsänderungen in einem Laserverstärker für eine gewisse Wellenlänge als Funktion der bis zu diesem Augenblick verbrauchten Pumpenergie, wobei man bei dem Verfahren eine kontinuierliche Lichtstrahlung, die jene Wellenlänge und eine Leistung Pe aufweist, erzeugt, diese Strahlung durch den Verstärker hindurchgehen läßt, einen Anteil der verstärkten Strahlung am Verstärkerausgang abnimmt, während der Pumpdauer mittels Lichtimpulsen die Änderung der Leistung Ps dieses Anteils mißt und den Quotienten Ps durch berechnet, der während des Pumpens die Verstärkungsänderungen G(t) als Funktion der Zeit liefert, dadurch gekennzeichnet, daß man das Anwachsen E(t) der im Laufe dieses Pumpens verwendeten Pumpenergie mißt und daß man durch Entfernen der Zeit t zwischen G(t) und E(t) eine Beziehung G(E) ableitet, die die gesuchten Verstärkungsänderungen zu jedem Zeitpunkt des Pumpens als Funktion der Pumpenergie darstellt, die bis zu diesem Augenblick verbraucht worden ist.

2. Verfahren nach Anspruch 1, dadurch gekennzeichnet, daß man, um das Anwachsen E(t) der im Laufe des Pumpens bis zum Zeitpunkt t verbrauchten Pumpenergie zu messen, die Versorgungsspannung V(t) und den Versorgungsstrom I(t) zum Zeitpunkt t mißt, das Produkt V(t).I(t) bildet, dieses Produkt über die Zeit integriert, was eine Energie EF(t) ergibt, die in dem Vorsorgungsschaltkreis der Pumpeinrichtung verlorene Stromenergie EJ(t) bestimmt und die Summe EF(t)+EJ(t) berechnet.

3. Vorrichtung zum Messen der Verstärkungsänderungen eines Lasers (10) zur Durchführung des Verfahrens nach Anspruch 1 oder 2, mit einem verstärkenden Stab (12) und einer optischen Pumpeinrichtung (14, 16), die auf dem verstärkenden Stab gerichtete Lichtimpulse aussendet, wobei die Verstärkung für eine gewisse Wellenlänge als Funktion der von der Pumpeinrichtung gelieferten Pumpenergie gemessen wird, wobei diese Vorrichtung umfaßt eine Quelle (40), die fortlaufend Lichtstrahlung mit jener Wellenlänge und einer Leistung Pe liefert, wobei diese Strahlung durch den verstärkenden Stab (12) mit einem Abstand von der Achse dieses Stabes, der gleich einem vorbestimmten Radius ist, hindurchgeht, eine Einrichtung (42), um einen Anteil der verstärkten Strahlung am Verstärkerausgang abzunehmen, einen Photoempfänger (44), der diesen Anteil erhält und daraus die Leistung Ps während der Pumpdauer mißt, und eine Einrichtung (46), um den Quotienten Ps durch Pe zu bilden und ein Signal G(t) abzugeben, welches die Verstärkungsänderungen als Funktion der Zeit während des Pumpens darstellt, dadurch gekennzeichnet, daß die Vorrichtung ferner eine Einrichtung (50), um ein die im Laufe des Pumpens bis zu dem Zeitpunkt t verbrauchte Pumpenergie darstellendes Signal zu erzeugen, une eine Einrichtung (52) umfaßt, um durch Entfernen der Zeit t zwischen den zwei Signalen G(t) und E(t) ein Signal G(E) abzuleiten, welches die Verstärkungsänderungen zu jedem Zeitpunkt des Pumpens als Funktion der Energie darstellt, die bis zu diesem Zeitpunkt durch das Pumpen verbraucht wurde, wobei diese Verstärkung diejenige des verstärkernahen Stabes in einem Abstand von der Achse ist, der gleich dem vorbestimmten Radius ist.

4. Vorrichtung nach Anspruch 3, dadurch gekennzeichnet, daß die Einrichtung (50) zum Abgeben des Signals E(t), welches die im Laufe des Pumpens bis zu dem Zeitpunkt verbrauchte Energie darstellt, umfaßt:

— einen Schaltkreis (54) zum Messen der Versorgungsspannung V(t),
— einen Schaltkreis (56) zum Messen des Ver-sorgungsstromes I(t),
— eine Multiplikationseinrichtung (58), die mit den zwei vorhergehenden Schaltkreisen (54, 56) verbunden ist und ein Produktsignal P(t)=V(t).I(t) liefert,
— einen Integrator (60), der mit der Multiplikationseinrichtung verbunden ist und ein Signal EF(t) abgibt,
— einen Schaltkreis (62) zum Bestimmen der Energie EJ(t), die durch Stromwärme in den Versorgungsschaltkreis für das Pumpen verloren ist,
— eine Addiereinrichtung (64), die mit dem letzteren Schaltkreis (62) und dem Integrator (60) verbunden ist und das gesuchte Signal E(t)=EF(t)+EJ(t) liefert.

5. Vorrichtung nach Anspruch 3 oder 4, dadurch gekennzeichnet, daß die Quelle (40) ein Lichtbündel liefert, dessen Durchmesser mindestens gleich dem Radius des Laserverstärkers ist, und der Photoempfänger (44) eine Vielzahl Photoempfangselemente aufweist, die längs des Radius des Verstärkers in Abständen $R_0$, $R_1$, $R_2 \ldots R_n$ von der Achse dieses Verstärkers angeordnet sind, wobei diese Photoempfänger der Einrichtung (52) Signale $G_{R0}(t)$, $G_{R1}(t)$, $G_{R2}(t)$, ..., $G_{Rn}(t)$ liefern und diese Einrichtung ebenso viele Signale $G_{R0}(E)$, $G_{R1}(E)$, $G_{R2}(E)$, ..., $G_{Rn}(E)$ abgibt, die die Verstärkungsänderungen für die verschiedenen Werte $R_0$, $R_1$, $R_2$, ..., $R_n$ darstellen.

6. Vorrichtung nach Anspruch 5, dadurch gekennzeichnet, daß sie ferner Speicher (100, 101, 102, ...), von denen jeder einen mit der Einrichtung (52) zum Entfernen der Zeit verbundenen Eingangaufweist und die von der Einrichtung (52) zum Entfernen abgegebenen Signale $G_{R0}(E)$, $G_{R1}(E)$, $G_{R2}(E)$, ..., $G_{Rn}(E)$ speichert, ebensoviele Recheneinrichtungen (110, 111, 112, ...), die jeweils mit einem der Speicher verbunden sind und die Werte $G_{R0}(E_1)$, $G_{R1}(E_1)$, $G_{R2}(E_1)$, ..., $G_{Rn}(E_1)$ bestimmen, die von der Verstärkung für eine besondere Energie $E_1$ genommen sind, und eine Einrichtung (120) umfaßt, die mit den Recheneinrichtungen verbunden ist und die Verstärkungsänderungen $G_{E1}(R)$ längs des Radius des Verstärkers für diese Energie $E_1$ bestimmt.

**Claims**

1. A process for the measurement of instantaneous variations in the gain of a laser amplifier operating at a determined wavelength, as a function of the pumping energy provided up to that instant, the process comprising generating continuous luminous radiation having said wavelength and a power Pe, passing said radiation through the amplifier, sampling a portion of the amplified radiation at the output of the amplifier, measuring variations in the power Ps of said portion during pumping, from light pulses, and calculating the quotient Ps/Pe, which determines, during the course of pumping, the variations in gain G(t) as a function of time, said process being characterised in that the increase E(t) in the pumping energy employed during pumping is measured, and in that there is deduced, by elimination of the time $t$ between G(t) and E(t), a relation G(E) which represents the variation in gain which it is desired to measure at each instant of the pumping, as a function of the pumping energy provided up to that instant.

2. A process according to claim 1, characterised in that, in order to measure the increase E(t) of the pumping energy employed during pumping up to the instant $t$, the supply potential V(t) and the supply current I(t) are measured at the instant t, the product V(t). I(t) is calculated, said product is integrated over time, which provides an energy EF(t), the energy EJ(t) lost by the Joule effect in the supply circuit of the pumping means is determined, and the sum EF(t)+EJ(t) is calculated.

3. Apparatus for measurement of variations in gain of a laser (10) for carrying out a process according to claim 1 or 2, comprising an amplifier bar (12) and an optical pumping means, (14, 16) emitting light pulses directed towards the amplifier bar, the gain for a determined wavelength being measured as a function of the pumping energy delivered by the pumping means, said apparatus comprising a source (40) emitting continuous luminous radiation having said wavelength and a power Pe, said radiation passing through amplifier bar (12) at a distance from the axis of said bar having a predetermined radius, a means (42) for sampling a portion of the amplified radiation at the output of the amplifier, a photoreceptor (44) which receives said portion and measures the power Ps during the duration of pumping, a means (46) for calculating the quotient of Ps/Pe, and delivering a signal G(t) which represents variations in the gain as a function of time during pumping, said apparatus being characterised in that it additionally comprises a means (50) for delivering a signal E(t) representing the pumping energy provided during pumping up to the instant t, and a means (52) for calculating, by elimination of time t between the two signals G(t) and E(t), a signal G(E) which represents variations in gain at each instant of pumping as a function of the energy provided by the pumping up to that instant, said gain being that of the amplifier bar at a distance from the axis equal to the predetermined radius.

4. Apparatus according to claim 3, characterised in that the means (50) for delivering the signal E(t) representing the pumping energy given out during pumping up to the instant t, comprises:

— a circuit (54) for measuring the supply potential V(t),
— a circuit (56) for measuring the supply current I(t),
— a multiplier (58) connected to the two preceding circuits (54, 56) and delivering a product signal $P(t)=V(t).I(t)$,
— an integrator (60) connected to the multiplier and delivering a signal EF(t),
— a circuit (62) for measuring the energy loss EJ(t) resulting from the Joule effect in the supply circuit for pumping, and
— an adder (64) connected to said latter circuit (62) and to the integrator (60) and delivering the desired signal $E(t)=EF(t)+EJ(t)$.

5. Apparatus according to either of claims 3 and 4, characterised in that the source (40) delivers a light beam whose diameter is at least equal to the radius of the laser amplifier, the photoreceptor (44) comprising a plurality of photoreceptor elements distributed along the radiation of the amplifier at distances $R_0$, $R_1$, $R_2 \ldots R_n$ from the axis of said amplifier, said photoreceptors delivering signals $G_{R0}(t)$, $G_{R1}(t)$, $G_{R2}(t), \ldots G_{Rn}(t)$, to means (52), said means providing the signals $G_{R0}(E)$, $G_{R1}(E)$, $G_{R2}(E), \ldots G_{Rn}(E)$, representing the variations in gain for the different values $R_0$, $R_1$, $R_2, \ldots R_n$.

6. Apparatus according to claim 5, characterised in that it additionally comprises memories (100, 101, 102 ...) each having an input connected to the time-elimination means (52) and adapted to memorise the signals $G_{R0}(E)$, $G_{R1}(E)$, $G_{R2}(E), \ldots G_{Rn}(E)$ delivered by the elimination means (52) and calculation means (110, 111, 112 ...) each connected to one of said memories and adapted to determine the values $G_{R0}(E_1)$, $G_{R1}(E_1)$, $G_{R2}(E_1), \ldots G_{Rn}(E_1)$ of the gain for a particular energy $E_1$, and a means (120) connected to said calculating means and adapted to determine the variations in gain $G_{E1}(R)$ along the radius of the amplifier for said energy E1.

FIG. 1

FIG. 2

1

FIG. 3

$P_S(t)$

FIG. 4

FIG. 5

FIG. 6

$I(t)$

0 063 516

FIG. 7

FIG. 8

FIG. 9

3

FIG. 10

FIG. 11$_a$

FIG. 11$_b$

FIG. 12